# EUROPEAN PATENT APPLICATION

(11) **EP 4 435 629 A1**
(43) Date of publication of application: **25.09.2024**
(21) Application number: 23777808.9
(22) Date of filing: 13.03.2023
(51) Int. Cl.: G06F 16/74, G06F 3/0482, G06T 7/90

(54) **CARD DISPLAY METHOD AND APPARATUS, ELECTRONIC DEVICE, STORAGE MEDIUM, AND PROGRAM PRODUCT**

(30) Priority: 29.03.2022 CN 202210323885
(71) Applicant: Beijing Zitiao Network Technology Co., Ltd., Beijing 100190 (CN)
(72) Inventor: GUAN, Sainan, Beijing 100086 (CN); CAO, Jiabin, Beijing 100086 (CN); CUI, Congcong, Beijing 100086 (CN); LIU, Jiaying, Beijing 100086 (CN)
(74) Representative: Dentons UK and Middle East LLP
(86) International application number: PCT/CN2023/081029
(87) International publication number: WO 2023/185431

(57) **Abstract**

Embodiments of the present invention provide a card display method and apparatus, an electronic device, a storage medium, and a program product. The method comprises: receiving a display operation for a media content card corresponding to target media content; and in response to the display operation, displaying the media content card, wherein the media content card comprises a first region and a second region, the first region is used for displaying a target picture corresponding to the target media content, the second region is used for displaying media content information of the target media content, and the background color of the second region is associated with the picture color of the target picture.

## Description

The application claims priority to the Chinese patent application No. 202210323885.3, filed on March 29, 2022, the entire disclosure of which is incorporated herein by reference as part of the present application.

### TECHNICAL FIELD

Embodiments of the present disclosure relate to a field of computer technology, for example, relate to a card display method, a card display device, an electronic apparatus, a storage medium and a program product.

### BACKGROUND

Currently, users can quickly learn about video-related information through video cards. However, in related technologies, the display method of a video card is relatively monotonous, and cannot meet the needs of users.

### SUMMARY

Embodiments of the present disclosure provide a card display method, a card display device, an electronic apparatus, a storage medium and a program product, so as to enrich the display mode of a video card.

According to a first aspect, an embodiment of the present disclosure provides a card display method, including:
receiving a display operation for a media content card corresponding to a target media content; and
displaying the media content card in response to the display operation; the media content card comprises a first region and a second region, the first region is used to display a target picture corresponding to the target media content, the second region is used to display media content information of the target media content, and a background color of the second region is associated with a picture color of the target picture.

According to a second aspect, an embodiment of the present disclosure provides a card display device comprising:
an operation receiving module configured to receive a display operation of a media content card corresponding to a target media content; and
a card display module configured to display the media content card in response to the display operation; the media content card comprises a first region and a second region, the first region is used to display a target picture corresponding to the target media content, the second region is used to display media content information of the target media content, and a background color of the second region is associated with a picture color of the target picture.

According to a third aspect, an embodiment of the present disclosure provides a
a processor; and
a memory configured to store a computer program,
upon the computer program being executed by the processor, the card display method according to the embodiment of the present disclosure is realized by the processor.

According to a forth aspect, an embodiment of the present disclosure provides a computer-readable storage medium, the computer readable storage medium stores a computer program, upon the computer program being executed by the processor, the card display method according to the embodiment of the present disclosure is implemented.

According to a fifth aspect, an embodiment of the present disclosure provides a computer program product, upon the computer program product being executed by a computer, the card display method according to the embodiment of the present disclosure is realized by the computer.

### BRIEF DESCRIPTION OF DRAWINGS

Throughout the drawings, same or similar reference numbers refer to the same or similar elements. It is to be understood that the drawings are schematic, and that originals and elements are not necessarily drawn to scale.
FIG. 1 is a flow schematic diagram of a card display method provided by an embodiment of the present disclosure;
FIG. 2 is a display schematic diagram of a media content card provided by an embodiment of the present disclosure;
FIG. 3 is a flow schematic diagram of another card display method provided by an embodiment of the present disclosure;
FIG. 4 is a structural block diagram of a card display device provided by an embodiment of the present disclosure;
FIG. 5 is a schematic structural diagram of an electronic apparatus provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. It should be understood that the drawings and the embodiments of the present disclosure are only for exemplary purposes.

It should be understood that various steps recorded in the implementation modes of the method of the present disclosure may be performed according to different orders and/or performed in parallel. In addition, the implementation modes of the method may include additional steps and/or steps omitted or unshown.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic, and those skilled in the art should understand that unless otherwise explicitly stated in the context, it should be understood as "one or more".

Names of messages or information exchanged between a plurality of devices in the embodiments of the present disclosure are for illustrative purposes only, and are not used to limit the scope of these information or messages.

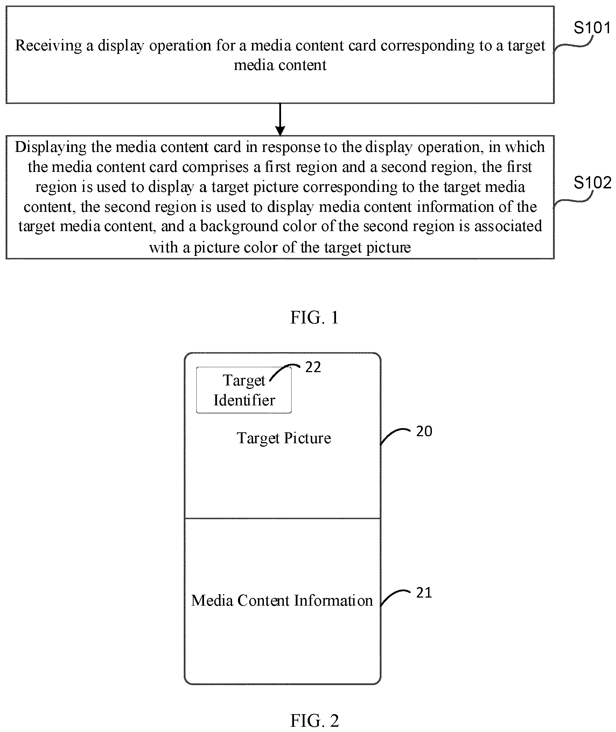

FIG. 1 is a flow schematic diagram of a card display method provided by an embodiment of the present disclosure. The method may be performed by a display device of the card, the device may be implemented by software and/or hardware, and may be configured in an electronic apparatus, for example, may be configured in a mobile phone or a tablet computer. The card display method provided by the embodiment of the present disclosure is suitable for a scenario of personalized display of media content cards. As shown in FIG. 1, the card display method provided by the embodiment may include:
S101: receiving a display operation for a media content card corresponding to a target media content.

The display operation may be any operation that instructs a client to display a media content card of at least one target media content, such as an operation of switching from another page to a page that displays a media content card (such as a video list page used to display a video list in a form of a video card), or an operation that instructs an electronic apparatus to display a media content card in a set page. The target media content may be understood as a media content corresponding to the currently displayed media content card, and the media content may be video or audio. Correspondingly, the media content card may be a video card or an audio card corresponding to the target media content.

Exemplary, the user can perform the display operation aiming at the media content card as needed. Correspondingly, the client can receive a user's display operation and use the media content corresponding to the media content card corresponding to the display operation as the target media content.

S102: displaying the media content card in response to the display operation, in which the media content card comprises a first region and a second region, the first region is used to display a target picture corresponding to the target media content, the second region is used to display media content information of the target media content, and a background color of the second region is associated with a picture color of the target picture.

In the present embodiment, as shown in FIG. 2, a first region 20 and a second region 21 are arranged in the media content card. The first region 20 may be used to display a target picture corresponding to the target media content to which the media content card belongs. The target picture may be understood as a picture associated with the target media content, such as a picture included in the target media content, a cover of the target media content, or a picture generated based on the target media content. The second region 21 may be used to display media content information of the target media content, such as a name of the target media content, a user name of a publisher of the target media content; the second region 21 may also be used to display interactive controls for the target media content, such as a like control, a comment control and/or a collection control of the target media content.

Exemplary, in the case where the display operation for the media content card aiming at the target media content is received, the media content card corresponding to the target media content is displayed in response to the display operation, and a target picture corresponding to the target media content is displayed in the first region of the media content card, and a color associated with the target picture is used as a background color of the second region in the media content card, and media content information of the target media content is displayed in the second region.

In the present embodiment, the background color of the second region of the media content card may be set to a color associated with the color of the target picture displayed in the first region, therefore, not only can the target picture be better integrated into the media content card, color change between the first region and the second region can be avoided to be too abrupt, and the display effect of the media content card can be improved, but also the second region can be displayed in different colors in the case where different video pictures are displayed in the first region, and/or, different media content cards are displayed in different colors instead of setting each of the media content cards to a fixed color, for example, in the case where a plurality of media content card with media contents are displayed on the page, if the target pictures displayed in the various the media content cards are different, the background colors of the second regions of the various media content cards are different, so that the various media content cards will be displayed in different colors, thus the display method of media content cards can be enriched, and personalized display of media content cards can be realized.

The card display method provided by the present embodiment includes: receiving a display operation for a media content card corresponding to a target media content, and displaying the media content card in response to the display operation, in which the media content card comprises a first region and a second region, the first region is used to display a target picture corresponding to the target media content, the second region is used to display media content information of the target media content, and a background color of the second region is associated with a picture color of the target picture. In the present embodiment, by adopting the above technical solution, the color associated with the picture displayed in the first region of the media content card is used as the background color of the second region of the media content card, the embodiment can not only enrich the display mode of the media content cards and realize personalized display of media content cards; it can also improve the integration of pictures displayed in the first region and improve the display effect of the media content card.

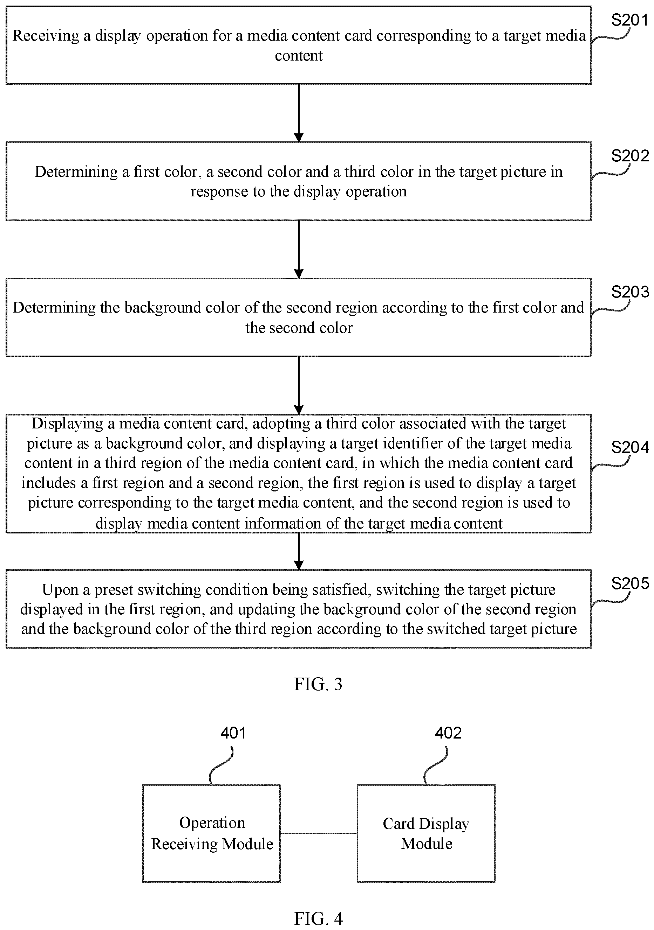

FIG. 3 is a flow schematic diagram of another card display method provided by an embodiment of the present disclosure. The solution in the present embodiment can be combined with one or more optional solutions in the above embodiments.

Optionally, before the displaying the media content card, the method further includes: determining a first color and a second color in the target picture; and determining the background color of the second region according to the first color and the second color .

Optionally, the card display method provided by the present embodiment further includes: displaying a target identifier of the target media content in a third region of the media content card, adopting a third color associated with the target picture as a background color.

Optionally, the card display method provided in the present embodiment further includes: in response to satisfying a preset switching condition, switching the target picture displayed in the first region, and updating the background color of the second region and a background color of the third region according to a switched target picture.

Correspondingly, as shown in FIG. 3, the card display method provided in the present embodiment may include:
S201: receiving a display operation for a media content card corresponding to a target media content.
S202: determining a first color, a second color and a third color in the target picture in response to the display operation.

The first color and the second color are different colors in the target picture. The third color and the first color or the second color may be the same color or different colors in the target picture, for example, the third color and the first color or the second color are different colors in the target picture, so as to improve the degree of personalization of the media content picture.

For example, the first color, the second color and the third color in the target picture may be determined according to the color proportions of the various colors in the target picture; or color information of the first color, color information of the second color and color information of the third color sent by the server are received, and the first color, the second color and the third color are determined according to the received color information. The color information of a color (such as the first color, the second color or the third color) may be the RGB (Red, Green, Blue) value of the color; a color proportion of a color may be understood as a proportion of pixels that display this color in the target picture among all the pixels in the target picture.

In one embodiment, before determining the first color and the second color in the target picture, the method further includes: according to the color proportions of the various color in the target picture, obtaining a color whose color proportion satisfies a first preset condition from the target picture as the first color, and obtaining a color whose color proportion satisfies a second preset condition from the target picture as the second color.

In the above embodiment, the first color may be a color whose color proportion in the target picture satisfies the first preset condition, and the second color may be a color whose color proportion in the target image satisfies the second preset condition. Exemplary, the first color may be one of the colors whose color proportion in the target image is greater than a set threshold; and the second color may be one of the colors whose color proportion in the target image is smaller than another set threshold. Or, in the case where the colors in the target image are ordered in an order of color proportion from large to small, the first color may be one of the first m (m is a positive integer) colors in the ordering result, such as the color with the largest color proportion, etc.; the second color may be one of the last n (n is a positive integer) colors in the ordering result, such as the color with the smallest color proportion, etc., and this case will be explained below as an example.

Exemplary, after the client receives the target picture sent by the server, or, before the server sends the target picture to the client, the first color and the second color may be determined based on the target picture, for example, the colors in the target picture are ordered in an order of color proportion from large to small or from small to large, and based on the ordering result, a color whose color proportion satisfies the first preset condition is obtained as the first color, and a color whose color proportion satisfies the second preset condition is obtained as the second color.

In one implementation, the third color may be a color whose color proportion in the target picture satisfies a third preset condition, for example, the color proportion is greater than or less than a set threshold, or the color whose ranking satisfies a preset condition in the order of color proportion. In this case, before a category identifier of the target media content is displayed in the media content card, the method may further include: according to the color proportions of the various colors in the target picture, obtaining a color whose color proportion satisfies a third preset condition from the target picture as the third color.

Exemplary, after the client receives the target picture sent by the server, or, before the server sends the target picture to the client, the third color may be determined based on the target picture, for example, the colors in the target picture may be ordered in an order of color proportion from large to small or from small to large, and based on the ordering result, a color whose color proportion satisfies a third preset condition is obtained as the third color, for example, the color whose color proportion is greater or smaller than that of the first color and whose ranking is adjacent to the first color in the ordering result is obtained as the third color, or, a q-th (q is a positive integer) color in the ordering result is obtained as the third color.

In the present embodiment, the client or server can determine the first color, the second color and the third color in the target picture according to the color proportions of the various colors in the target picture, for example, the server can determine the first color, the second color and the third color in the target picture according to the color proportions of the various colors in the target picture. During sending the target picture to the client, the color information of the determined first color, the determined second color and the determined third color is sent to the client, so as to reduce a calculation amount of the client and avoid affecting the performance of the client.

S203: determining the background color of the second region according to the first color and the second color.

In the present embodiment, the background color of the second region may be determined based on the first color and the second color in the target picture displayed in the first region, for example, the first color and the second color may be color-neutralized according to a preset weight, and the color-neutralized color may be used as the background color of the second region; or, the first color is used as the background color of one part of sub-regions in the second region, and the second color is used as the background color of the other part of sub-regions in the second region.

In order to improve the display effect of the second region, optionally, the background color that needs to be displayed by the various pixels in the second region may be determined adopting a manner of two-color gradient based on the first color and the second color, for example, one of the first color and the second color may be used as the background color that needs to be displayed by pixels at a vertex (such as the upper left vertex, etc.) or at a boundary (such as the left boundary or the upper boundary, etc.) of the second region, and the other one of the first color and the second color is used as the background color that needs to be displayed by pixels at another vertex (such as the lower right vertex, etc.) or at another boundary (such as the right boundary or lower boundary, etc.) of the second region, the background colors at the positions of the various pixels in the second region are determined in a gradient manner from one color to another color. In this case, optionally, the determining the background color of the second region based on the first color and the second color includes: performing a two-color gradient based on the first color and the second color to obtain the background color of the second region.

S204: displaying a media content card, and displaying a target identifier of the target media content in a third region of the media content card, adopting a third color associated with the target picture as a background color, in which the media content card includes a first region and a second region, the first region is used to display a target picture corresponding to the target media content, and the second region is used to display media content information of the target media content.

In the present embodiment, as shown in FIG. 2, a third region 22 may be arranged in the media content card. The third region 22 may be used to display a target identifier of the target media content, that is, the third region 22 may be a region where the target identifier of the target media content is located. The third region 22 may be located within or outside the first region 20 or the second region 21. The target identifier can be used to identify corresponding information of the target media content, for example, the target identifier may be a category identifier of the media content category to which the target media content belongs. The media content category may include, for example, games, life, knowledge, finance or entertainment, etc.

Exemplary, after determining the background color of the second region, the media content card for the target media content can be displayed, the target card is displayed in the first region 20 of the media content card; using the determined background color of the second region 21 as the background color, the media content information of the target media content is displayed in the second region 21 of the media content card; and using the third color associated with the target picture as the background color, the target identifier of the target media content is displayed in the third region 22 of the media content card, as shown in FIG. 2.

S205: upon a preset switching condition being satisfied, switching the target picture displayed in the first region, and updating the background color of the second region and the background color of the third region according to the switched target picture.

In the present embodiment, in the case where the target image displayed in the first region of the media content card changes, the background colors of the second and third regions of the media content card can be automatically updated based on the changed target picture, so as to enrich the presentation manners of the media content card.

Exemplary, upon the current condition satisfying the preset switching condition, the target picture displayed in the first region can be switched, according to the color proportions of the various colors in the switched target picture, the first color, the second color and the third color in the switched target picture are determined, the background color of the second region is updated based on the first color and the second color, and the background color of the third region is updated to the third color. The preset switching condition may be set flexibly, for example, the preset switching condition may be set to be receiving a trigger operation for switching the target picture displayed in the first region, or, the display time of the currently displayed target picture in the first region reaching a preset time (for example, 10 seconds or 30 seconds, etc.), or the like.

It should be noted that in the present embodiment, after determining the background color of the second region or the third region, it can also be determined whether the colors of the media content information displayed in the second region and the target identifier displayed in the third region are close to the background color of the corresponding region, if so, a transparent mask whose color is much different from the color of the media content information or the target identifier may be added between, the media content information or the target identifier, and the background of the corresponding region, or, the color of the media content information or the target identifier is updated to a color that is much different from the background color of the corresponding region, so as to ensure the legibility of the media content information or the target identifier.

In the card display method provided by the present embodiment, the background color of the second region of the media content card is determined based on the first color and the second color in the target picture, and the third color in the target picture is used as the background color of the third region of the media content card, which can enrich the presentation manners of the media content card, and improve the experience of the user.

FIG. 4 is a structural block diagram of a card display device provided by an embodiment of the present disclosure. The device may be implemented by software and/or hardware, and may be configured in an electronic apparatus, for example, the device can be configured in a mobile phone or a tablet computer, and can display a media content card by executing a card display method. As shown in FIG. 4, the card display method provided by the present embodiment may include: an operation receiving module 401 and a card display module 402;
the operation receiving module 401 is configured to receive a display operation for a media content card corresponding to a target media content;
the card display module 402 is configured to display the media content card in response to the display operation, the media content card comprises a first region and a second region, the first region is used to display a target picture corresponding to the target media content, the second region is used to display media content information of the target media content, and a background color of the second region is associated with a picture color of the target picture.

In the card display device provided by the present embodiment, the display operation for the media content card corresponding to the target media content is received by the operation receiving module; and the card display module is configured to display the media content card corresponding to the target media content responding to the display operation, the media content card comprises the first region and the second region, the first region is used to display the target picture corresponding to the target media content, the second region is used to display media content information of the target media content, and the background color of the second region is associated with the picture color of the target picture. In the present embodiment, by adopting the above technical solution, the color associated with the picture displayed in the first region of the media content card is used as the background color of the second region of the media content card, not only the display manners of media content cards can be enriched and personalized display of media content cards can be realized, but also the integration of the pictures displayed in the first region can be improved, and the display effect of the media content card can be improved.

The card display device provided by the present embodiment may further include: a color determination module configured to determine the first color and the second color in the target picture before the displaying the media content card; and a background color determination module configured to determine the background color of the second region according to the first color and the second color.

In the above solution, the background color determination module may be configured to determine the background color of the second region in the following manner: performing a two-color gradient based on the first color and the second color to obtain the background color of the second region.

The card display method provided by the present embodiment may further include: a first color acquisition module configured to obtain a color whose color proportion satisfies the first preset condition from the target picture as the first color, before the determining the first color and the second color in the target picture, according to color proportions of the various colors in the target picture, and obtain a color whose color proportion satisfies the second preset condition from the target picture as the second color.

The card display module 402 may also be configured to display the target identifier of the target media content in the third region of the media content card adopting a third color associated with the target picture as a background color.

The card display device provided by the present embodiment may further include: a second color acquisition module which is configured to obtain a color whose color proportion satisfies the third preset condition from the target picture as the third color, before displaying the category identifier of the target media content in the media content card, according to the color proportions of the various colors in the target picture.

The card display device provided by the present embodiment may further include: a background color update module which is configured to switch the target picture displayed in the first region, in response to satisfying the preset switching condition, and update the background color of the second region and the background color of the third region according to the switched target picture.

The card display device provided by the embodiment of the present disclosure can execute the card display method provided by any one of the embodiments of the present disclosure, and has corresponding function modules and beneficial effects for executing the card display method. For technical details that are not described in detail in the present embodiment, please refer to the card display method provided by any one of the embodiments of the present disclosure.

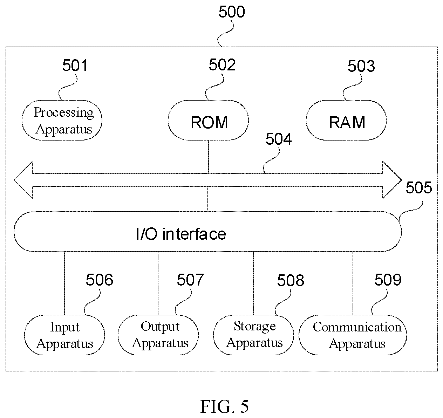

Referring to FIG. 5, FIG. 5 illustrates a schematic structural diagram of an electronic device (for example, a terminal device) 500 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 5 is merely an example.

As illustrated in FIG. 5, the electronic device 500 may include a processing apparatus 501 (e.g., a central processing unit, a graphics processing unit, etc.), and the processing apparatus 501 can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 5 illustrates the electronic device 500 having various apparatuses, it should be understood that not all of the illustrated apparatuses are necessarily implemented or included. More or fewer apparatuses may be implemented or included alternatively.

In an embodiment, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 509, or installed from the storage apparatus 508, or installed from ROM 502. When the computer program is executed by the processing apparatus 501, the above functions defined in the embodiments of the present disclosure are executed.

It should be noted that the above computer-readable medium in the present disclosure may be a computer-readable signal medium, a computer-readable storage medium, or any combinations of the two. The computer-readable storage medium may be, for example, a system, an apparatus or a device of electricity, magnetism, light, electromagnetism, infrared, or semiconductor, or any combinations of the above. Examples of the computer-readable storage medium may include: an electric connector with at least one wire, a portable computer magnetic disk, a hard disk drive, a random access memory (RAM), a read-only memory (ROM), an erasable programmable read-only memory (for example, Electronic Programable Read Only Memory (EPROM) or flash memory), an optical fiber, a Compact Disc-Read Only Memory (CD-ROM), an optical storage device, a magnetic storage device or any suitable combinations of the above. In the present disclosure, the computer-readable storage medium may be a visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a Hyper Text Transfer Protocol (HTTP), and may interconnect with any form or medium of digital data communication (such as a communication network). Examples of the communication network include a Local Area Network (LAN), a Wide Area Network (WAN), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above computer-readable medium carries at least one program, in the case where the above-mentioned at least one program is executed by the electronic apparatus, the electronic apparatus is caused to: receive a display operation for the media content card corresponding to the target media content; in response to the display operation, displaying the media content card in response to the display operation, wherein the media content card comprises a first region and a second region, the first region is used to display a target picture corresponding to the target media content, the second region is used to display media content information of the target media content, and a background color of the second region is associated with a picture color of the target picture.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including at least one executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, available exemplary types of hardware logic components include: a Field-Programmable Gate Array (FPGA), an Application Specific Integrated Circuit (ASIC), an Application Specific Standard Parts (ASSP), a System on Chip (SOC), a Complex Programmable Logical Device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. Examples of machine-readable storage medium include electrical connection with at least one wire, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or suitable combinations of the foregoing.

According to one or more embodiments of the present disclosure, example 1 provides a card display method, comprising:
receiving a display operation for a media content card corresponding to a target media content;
displaying the media content card in response to the display operation, in which the media content card comprises a first region and a second region, the first region is used to display a target picture corresponding to the target media content, the second region is used to display media content information of the target media content, and a background color of the second region is associated with a picture color of the target picture.

According to one or more embodiments of the present disclosure, in Example 2 which is according to the method of Example 1, before the displaying the media content card, the method further includes:
determining a first color and a second color in the target picture; and
determining the background color of the second region according to the first color and the second color.

According to one or more embodiments of the present disclosure, in Example 3 which is according to the method of Example 2, the determining the background color of the second region according to the first color and the second color includes:
performing a two-color gradient based on the first color and the second color to obtain the background color of the second region.

According to one or more embodiments of the present disclosure, in Example 4 which is according to the method of Example 2, before the determining the first color and the second color in the target picture, the method further includes:
according to color proportions of various colors in the target picture, obtaining a color whose color proportion satisfies a first preset condition from the target picture as a first color, and obtaining a color whose color proportion satisfies a second preset condition from the target picture as a second color.

According to one or more embodiments of the present disclosure, in Example 5 which is according to the method of any one of Examples 1 to 4, the method further includes:
displaying a target identifier of the target media content in a third region of the media content card adopting a third color associated with the target picture as a background color.

According to one or more embodiments of the present disclosure, in Example 6 which is according to the method of Example 5, before displaying the category identifier of the target media content in the media content card, the method further comprises:
according to color proportions of a plurality of colors in the target picture, obtaining a color whose color proportion satisfies a third preset condition from the target picture as the third color.

According to one or more embodiments of the present disclosure, in Example 7 which is the method according to Example 5, the method further includes:
switching the target picture displayed in the first region, and updating the background color of the second region and a background color of the third region according to a switched target picture, in response to satisfying a preset switching condition.

According to one or more embodiments of the present disclosure, Example 8 provides a card display device including:
an operation receiving module which is configured to receive the display operation for the media content card corresponding to the target media content;
a card display module which is configured to display the media content card in response to the display operation; the media content card comprises a first region and a second region, the first region is used to display a target picture corresponding to the target media content, the second region is used to display media content information of the target media content, and a background color of the second region is associated with a picture color of the target picture .

According to one or more embodiments of the present disclosure, Example 9 provides an electronic apparatus including:
a processor; and
a memory, which is configured to store a program,
upon the program being executed by the processor, the card display method as described in any one of Examples 1 to 7 is implemented by the processor.

According to one or more embodiments of the present disclosure, Example 10 provides a computer-readable storage medium, a computer program is stored on the computer-readable storage medium, upon the computer program being executed by the computer, the card display method as described in any one of Examples 1 to 7 is implemented.

In accordance with one or more embodiments of the present disclosure, Example 11 provides a computer program product, in the case where the computer program product is executed by a computer, the computer implements the card display method as described in any one of Examples 1 to 7.

## Claims

1. A card display method, comprising:
receiving a display operation for a media content card corresponding to a target media content; and
displaying the media content card in response to the display operation, wherein the media content card comprises a first region and a second region, the first region is used to display a target picture corresponding to the target media content, the second region is used to display media content information of the target media content, and a background color of the second region is associated with a picture color of the target picture.

2. The method according to claim 1, before the displaying the media content card, the method further comprises:
determining a first color and a second color in the target picture; and
determining the background color of the second region according to the first color and the second color.

3. The method according to claim 2, wherein the determining the background color of the second region according to the first color and the second color comprises:
performing a two-color gradient based on the first color and the second color to obtain the background color of the second region.

4. The method according to claim 2, before the determining the first color and the second color in the target picture, the method further comprises:
according to color proportions of a plurality of colors in the target picture, obtaining a color whose color proportion satisfies a first preset condition from the target picture as a first color, and obtaining a color whose color proportion satisfies a second preset condition from the target picture as a second color.

5. The method according to any one of claims 1 to 4, further comprising:
displaying a target identifier of the target media content in a third region of the media content card adopting a third color associated with the target picture as a background color.

6. The method according to claim 5, before the displaying a category identifier of the target media content in the media content card, the method further comprises:
according to color proportions of a plurality of colors in the target picture, obtaining a color whose color proportion satisfies a third preset condition from the target picture as the third color.

7. The method according to claim 5, further comprising:
switching the target picture displayed in the first region, and updating the background color of the second region and a background color of the third region according to a switched target picture, in response to satisfying a preset switching condition.

8. A card display device, comprising:
an operation receiving module, configured to receive a display operation for a media content card corresponding to a target media content; and
a card display module, configured to display the media content card in response to the display operation, wherein the media content card comprises a first region and a second region, the first region is used to display a target picture corresponding to the target media content, the second region is used to display media content information of the target media content, and a background color of the second region is associated with a picture color of the target picture.

9. An electronic apparatus, comprising:
a processor; and
a memory communicatively connected with the processor, wherein
the memory stores a computer program executable by the processor, upon the computer program being executed by the processor, the processor can execute the card display method according to any one of claims 1 to 7.

10. A computer-readable storage medium, the computer readable storage medium stores a computer instruction, the computer instruction is used to cause the card display method according to any one of claims 1 to 7 to be implemented upon the processor being executed.

11. A computer program product, wherein the computer program product comprises a computer program, upon the computer program being executed by the processor, the card display method according to any one of claims 1 to 7 is implemented.
